# EUROPÄISCHE PATENTSCHRIFT

(11) **EP 3 639 352 B1**
(45) Veröffentlichungstag und Bekanntmachung des Hinweises auf die Patenterteilung: **04.10.2023**
(21) Anmeldenummer: 17746089.6
(22) Anmeldetag: 31.07.2017
(51) Int. Cl.: H02M 1/32, H02J 3/36, H02M 7/483

(54) **STROMRICHTERANORDNUNG MIT EINER ABSCHALTUNGSFÄHIGKEIT EINES FEHLERSTROMS UND EIN VERFAHREN ZUR ABSCHALTUNG EINES FEHLERSTROMS BEI EINER SOLCHEN STROMRICHTERANORDNUNG**
CONVERTER ASSEMBLY WITH THE CAPABILITY TO DISCONNECT A RESIDUAL CURRENT AND METHOD FOR DISCONNECTING A RESIDUAL CURRENT IN A CONVERTER ASSEMBLY OF THIS TYPE
ENSEMBLE CONVERTISSEUR DE PUISSANCE PRÉSENTANT UNE CAPACITÉ DE COUPURE D'UN COURANT DE FUITE ET PROCÉDÉ POUR LA COUPURE D'UN COURANT DE FUITE POUR LEDIT ENSEMBLE CONVERTISSEUR DE PUISSANCE

(43) Veröffentlichungstag der Anmeldung: 22.04.2020
(73) Patentinhaber: Siemens Energy Global GmbH & Co. KG, 81739 München (DE)
(72) Erfinder: SCHÖN, Andre, 91058 Erlangen (DE)
(86) Internationale Anmeldenummer: PCT/EP2017/069268
(87) Internationale Veröffentlichungsnummer: WO 2019/024972

(56) Entgegenhaltungen:
- WO-A1-2012/103936
- WO-A1-2014/127829
- WO-A1-2017/050345

## Beschreibung

Die Erfindung betrifft eine Stromrichteranordnung mit einer Abschaltungsfähigkeit eines Fehlerstroms gemäß Anspruch 1 und ein zugehöriges Verfahren gemäß Anspruch 6.

Modulare Mehrstufen-Stromrichter (MMC) sind aus der Hochspannungs-Gleichstromübertragung bekannt. Sie werden eingangsseitig von einem Wechselstromnetz gespeist und stellen ausgangsseitig eine Gleichspannung zur elektrischen Energieversorgung im Hochspannungsbereich bereit. Der Anschluss erfolgt über Transformatoren, die sekundärseitig an parallel geschaltete zweipolige Phasenmodule angeschlossen sind. Die parallel geschalteten Phasenmodule sind jeweils aus zwei Stromrichtermodulen gebildet und über einen Verbindungspunkt miteinander verbunden. Jeder Verbindungspunkt bildet einen Anschluss für eine der sekundärseitigen Phasen eines Transformators. Die beiden Stromrichtermodule sind selbst wiederum aus in Reihe geschalteten Submodulen gebildet, welche Halbleiterschalter aufweisen, die in Vollbrückenschaltung oder in Halbbrückenschaltung ausgeführt sind. Man spricht in diesem Zusammenhang auch von Vollbrücken- und Halbbrückenmodulen (Vollbrücken- und Halbbrücken-Submodulen).

Stromrichter mit Halbbrückenmodulen zeichnen sich durch eine hohe Flexibilität und Effizienz aus. Bei Kurzschlüssen auf der Gleichspannungsseite können diese Stromrichter auf Grund der Gleichrichterwirkung der Submodule keine entsprechende Gegenspannung aufbauen und müssen zur Abschaltung des DC-Kurzschlusses vom Wechselspannungsnetz getrennt werden.

Stromrichter mit Vollbrückenmodulen können auf Grund ihrer bipolaren Natur auch Gleichspannungen kleiner als die verketteten Wechselspannungen bereitstellen und somit Kurzschlüsse auf der Gleichspannungsseite durch Erzeugen einer entsprechenden Gegenspannung aktiv abschalten. Sie stellen dem Wechselstromnetz nach dem Abschalten weiterhin Dienstleistungen wie z.B. Blindleistung (Blindstromstützung) zur Verfügung. Auf Grund der höheren Zahl an Halbleiterschaltern im Strompfad entstehen aber deutlich höhere elektrische Verluste.

Aus der internationalen Patentanmeldung WO 2017/050345 A1 ist eine Stromrichteranordnung mit zwei elektrisch in Reihe geschalteten Teilstromrichtern bekannt, die jeweils Vollbrückenzellen und Halbbrückenzellen aufweisen können. Nach Erkennen eines Fehlers auf der Gleichspannungsseite wird der Fehlerstrom auf Null reduziert.

Die Patentanmeldung WO 2012/103936 A1 offenbart einen Stromrichter mit Halbbrückensubmodulen und Vollbrückensubmodulen, bei dem ein bei einem Fehler an einer Hochspannungs-Gleichstromleitung gezündeter Lichtbogen gelöscht wird, indem mittels mindestens eines Vollbrückensubmoduls eine Gegenspannung zur Spannung am Lichtbogen erzeugt wird.

Die Patentanmeldung WO 2014/127829 A1 offenbart eine Stromrichteranordnung mit zwei elektrisch in Reihe geschalteten Teilstromrichtern, bei der die Teilstromrichter Submodule mit Voll- oder Halbbrückenschaltung aufweisen können.

Die Aufgabe der Erfindung ist es, eine Stromrichteranordnung zu erzielen, die Fehlerströme auf der Gleichstromseite, insbesondere Kurzschlussströme, in kurzer Zeit aktiv abschaltet und relativ geringe elektrische Verluste aufweist. Weiter ist die Aufgabe der Erfindung, ein entsprechendes Verfahren zur Abschaltung eines Fehlerstroms bei einer entsprechenden Stromrichteranordnung vorzuschlagen.

Die Aufgabe wird bezogen auf den Stromrichter durch die Merkmale des Anspruchs 1 und bezogen auf das Verfahren durch die Merkmale des Anspruchs 6 gelöst; die Unteransprüche stellen vorteilhafte Ausgestaltungen dar.

Die Lösung bezieht sich auf eine Stromrichteranordnung von mehrphasigen Mehrstufen-Stromrichtern, die an Wechselstromnetze über primärseitig parallel geschaltete Transformatoren angeschlossen werden und die eine Gesamt-Gleichspannung (an zwei Ausgangs-Gleichspannungsanschlüssen) zur elektrischen Energieversorgung im Hochspannungsbereich bereitstellen,
- wobei die Stromrichteranordnung in Reihe geschaltete Teil-Stromrichter aufweist, deren Teil-Gleichspannungen die Gesamt-Gleichspannung (des Gesamtstromrichters) bilden und die jeweils drei parallel geschaltete (miteinander verbundene) zweipolige Phasenmodule aufweisen,
- wobei jedes Phasenmodul aus zwei in Reihe geschalteten Stromrichtermodulen gebildet ist, die jeweils über einen ersten Verbindungspunkt miteinander verbunden sind, der einen der Phasenanschlüsse bildet,
- wobei jeweils ein Transformator an die Phasenanschlüsse eines Teil-Stromrichters angeschlossen ist,
- wobei die beiden Stromrichtermodule der Phasenmodule eines ersten Teil-Stromrichters aus in Reihe geschalteten unipolaren Submodulen und die eines zweiten Teil-Stromrichters aus in Reihe geschalteten bipolaren Submodulen gebildet und der erste und zweite Teil-Stromrichter über einen zweiten Verbindungspunkt miteinander verbunden sind,
- wobei eine Regelung zur Einstellung des Gleichstroms (der durch die Teil-Stromrichter fließt) auf einen vorgegebenen Sollwert vorgesehen ist, welche jeweils zumindest die Teil-Gleichspannung des zweiten Teil-Stromrichters verringert, wenn der Gleichstrom den Sollwert überschreitet, und
- wobei die Teil-Gleichspannung des zweiten Teil-Stromrichters durch die Regelung zumindest bis zur Kompensation der Teil-Gleichspannung des ersten Teil-Stromrichters invertierbar ist.

Die Lösung des Verfahrens zur Abschaltung eines Gleichstrom-Fehlerstroms bezieht sich auf eine Stromrichteranordnung (mehrphasiger Mehrstufen-Stromrichter),
- wobei an diese Wechselstromnetze über primärseitig parallel geschaltete Transformators angeschlossen werden,
- wobei diese eine Gesamt-Gleichspannung (an zwei Ausgangs-Gleichspannungsanschlüssen) zur elektrischen Energieversorgung im Hochspannungsbereich bereitstellt,
- wobei diese in Reihe geschaltete Teil-Stromrichter aufweist, aus deren Teil-Gleichspannungen die Gesamt-Gleichspannung (des Gesamtstromrichters) gebildet wird,
- wobei die Teil-Stromrichter jeweils parallel geschaltete (miteinander verbundene) zweipolige Phasenmodule aufweisen,
- wobei jedes Phasenmodul aus zwei in Reihe geschalteten Stromrichtermodulen gebildet ist, die jeweils über einen ersten Verbindungspunkt miteinander verbunden sind, der einen der Phasenanschlüsse bildet,
- wobei jeweils ein Transformator an die Phasenanschlüsse eines Teil-Stromrichters angeschlossen ist,
- wobei die beiden Stromrichtermodule der Phasenmodule PM eines ersten Teil-Stromrichters aus in Reihe geschalteten unipolaren Submodulen und die eines zweiten Teil-Stromrichters aus in Reihe geschalteten bipolaren Submodulen gebildet und der erste und zweite Teil-Stromrichter über einen zweiten Verbindungspunkt miteinander verbunden sind,
- wobei bei dem Verfahren der Gleichstrom (der durch die Teil-Stromrichter fließt) auf einen vorgegebenen Sollwert geregelt wird, indem jeweils zumindest die Teil-Gleichspannung des zweiten Teil-Stromrichters verringert wird, wenn der Gleichstrom den Sollwert überschreitet, und
- wobei zumindest die Teil-Gleichspannung des ersten Teil-Stromrichters von der Teil-Gleichspannung des zweiten Teil-Stromrichters (zur Verringerung des Gleichstroms) kompensiert wird, indem vom zweiten Teil-Stromrichter eine entsprechende Gegenspannung gebildet wird.

Technisch relativ einfach ist es, wenn die unipolaren Submodule Halbleiterschalter aufweisen, die als Halbbrücke (HB) geschaltet sind.

Technisch relativ einfach ist es, wenn die bipolaren Submodule Halbleiterschalter aufweisen, die als Vollbrücke (VB) geschaltet sind.

Mit Vorteil gehören die Halbleiter der Halbleiterschalter der einzelnen Teil-Stromrichter zu verschiedenen Spannungsklassen, um die Stromtragfähigkeit der Teil-Stromrichter an einander anzupassen.

Vorteilhaft ist es, wenn die Halbleiterschalter der Teil-Stromrichter in einer Parallelschaltung ausgeführt sind, um die Stromtragfähigkeit beider Teil-Stromrichter aneinander anzupassen.

Die Lösung besteht also aus der Serienschaltung von jeweils zwei unmittelbar in Reihe geschalteten und zusammenwirkenden Teil-Stromrichtern, wobei einer der beiden Teil-Stromrichter nur aus bipolaren Submodulen und der andere Teil-Stromrichter nur aus unipolaren Submodulen gebildet ist. Die Gleichspannung der Stromrichteranordnung besteht aus der Summe der Gleichspannungen beider Teil-Stromrichter. Der Teil-Stromrichter mit den bipolaren Submodulen ist dabei so dimensioniert, dass dessen Gleichspannung größer als (mindesten jedoch gleich groß wie) die des Teil-Stromrichters mit den unipolaren Submodulen ist. Bei einem Fehlerstrom auf der Gleichspannungsseite, insbesondere einem Kurzschluss, wird die Gleichspannung des Teil-Stromrichters mit den bipolaren Submodulen durch die Stromrichterregelung innerhalb kürzester Zeit invertiert, so dass in Summe eine dem Fehlergleichstrom (Kurzschlussstrom) entgegen gerichtete Gleichspannung ansteht, die den Fehlergleichstrom (Kurzschlussstrom) durch Spannungskompensation aktiv abschaltet. Beide Teil-Stromrichter können dabei aktiv bleiben und dem Wechselstromnetz z.B. Blindleistung und dergleichen weiter zur Verfügung stellen, d.h. die übrige Funktionalität bleibt erhalten.

Darüber hinaus wird die Blockierspannung im Vergleich zu Stromrichteranordnungen nur mit bipolaren Submodulen für die volle Gleichspannung in etwa halbiert, was besonders für Kabelanwendungen (XLPE, begrenzte Polaritätswechsel-Festigkeit) vorteilhaft ist. Zusätzlich erhöht die vorgeschlagene Stromrichteranordnung die Verfügbarkeit, da z.B. beim Ausfall eines Teil-Stromrichters die Stromrichteranordnung mit reduzierter Gleichspannung weiter betrieben werden kann.

Die Erfindung wird nachfolgend anhand eines Ausführungsbeispiels näher beschrieben. Es zeigen:
- Fig. 1: einen als mehrphasiger Mehrstufen-Stromrichter ausgebildeten Gesamtstromrichter, der zwei Teil-Stromrichter aufweist,
- Fig. 2: ein Phasenmodul des einen Teil-Stromrichters mit Submodulen in Halbbrückenschaltung,
- Fig. 3: ein Phasenmodul des anderen Teil-Stromrichters mit Submodulen in Vollbrückenschaltung,
- Fig. 4: ein Submodul in Halbbrückenschaltung,
- Fig. 5: ein Submodul in Vollbrückenschaltung,
- Fig. 6: die Steuerung des Gesamtstromrichters gemäß Fig. 1,
- Fig. 7: den Verlauf der Gleichspannungen und des Gleichstroms nach einem ausgangsseitigen Kurzschluss über der Zeit,
- Fig. 8: zwei Teil-Stromrichter geschaltet als unsymmetrischer symmetrischer Monopol,
- Fig. 9: drei Teil-Stromrichter geschaltet als symmetrischer Monopol und
- Fig. 10: drei Teil-Stromrichter geschaltet als symmetrischer Bipol.

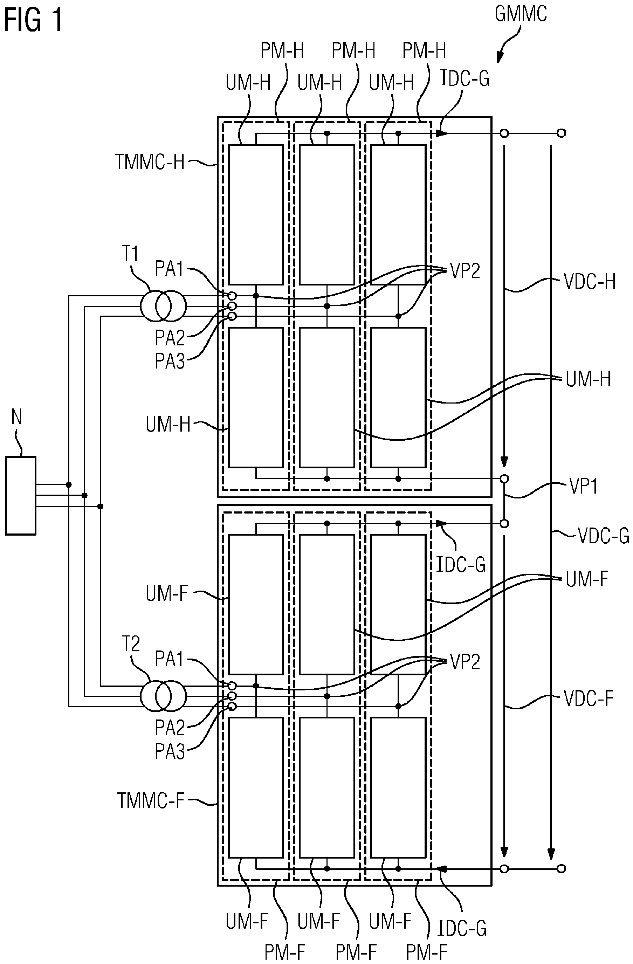

Fig. 1 zeigt eine Stromrichteranordnung GMMC, die als mehrphasiger Mehrstufen-Gesamtstromrichter ausgebildet ist. An die Stromrichteranordnung GMMC ist ein dreiphasiges Wechselstromnetz N über zwei Transformatoren T1, T2 angeschlossen. Die Primärwicklungen der beiden Transformatoren T1, T2 sind parallel geschaltet und die Sekundärwicklungen eines Transformators T1, T2 sind jeweils an Phasenanschlüssen PA1, PA2, PA3 eines Teil-Stromrichters TMMC-H, TMMC-F angeschlossen, die beide in Reihe geschaltet und über einen (ersten) Verbindungspunkt VP1 miteinander verbunden sind (und dadurch quasi einen Gesamtstromrichter bilden). An ihrem Ausgang stellen die beiden Teil-Stromrichter TMMC-H, TMMC-F jeweils eine Teil-Gleichspannung VDC-H, VDC-F zur Verfügung. Die beiden Teil-Gleichspannungen VDC-H, VDC-F bilden aufgrund der Reihenschaltung eine Gesamtgleichspannung VDC-G bei einem Gesamtgleichstrom IDC-G aus, der durch die beiden Teil-Stromrichter TMMC-H, TMMC-F fließt.

Beide Teil-Stromrichter TMMC-H, TMMC-F werden jeweils aus drei parallel geschalteten Phasenmodulen PM-H, PM-F gebildet. Die beiden Pole der zweipoligen Phasenmodule PM-H, PM-F sind bei der Parallelschaltung miteinander verbunden. Jedes Phasenmodul PM-H, PM-F besteht wiederum aus zwei in Reihe geschalteten Stromrichtermodulen UM-H, UM-F, die jeweils über einen zweiten Verbindungspunkt VP2 miteinander verbunden sind. Jeder Verbindungspunkt VP2 bildet einen der Phasenanschlüsse PA1, PA2, PA3.

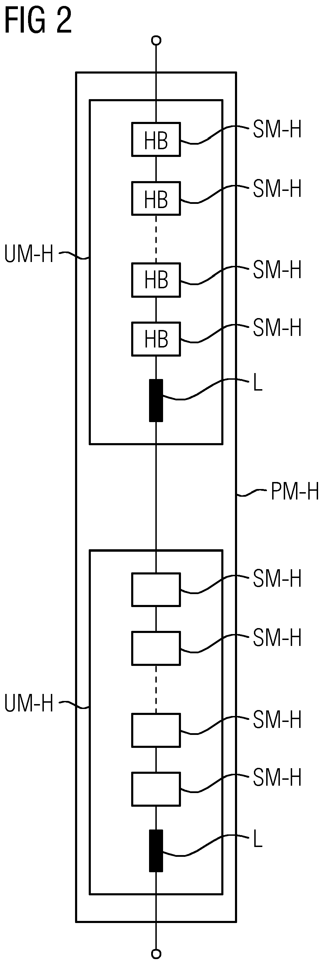

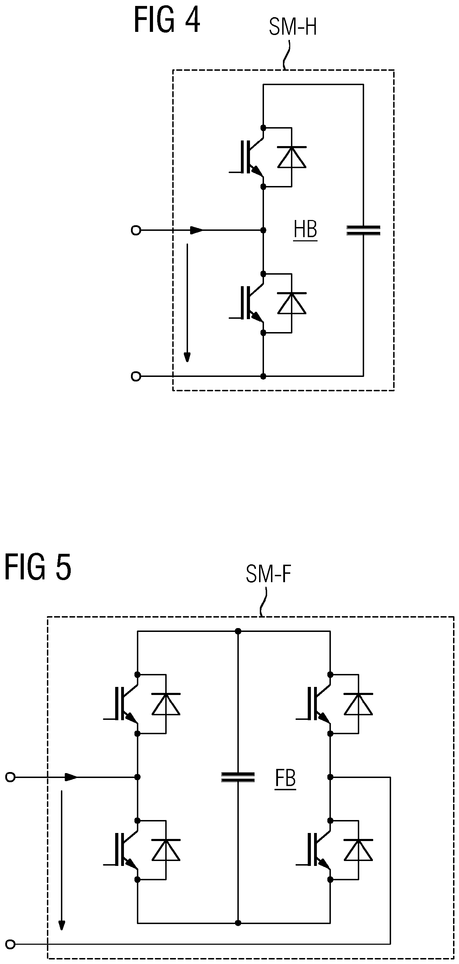

Fig. 2 zeigt schematisch ein Phasenmodul PM-H eines Teil-Stromrichters TMMC-H, das aus in Reihe geschalteten unipolaren Submodulen SM-H und einer Induktivität L gebildet ist. Die unipolaren Submodule SM-H der Teil-Stromrichter TMMC-H bestehen hier speziell aus Halbleiterschaltern, die als Halbbrücke HB (s. Fig. 4) geschaltet sind.

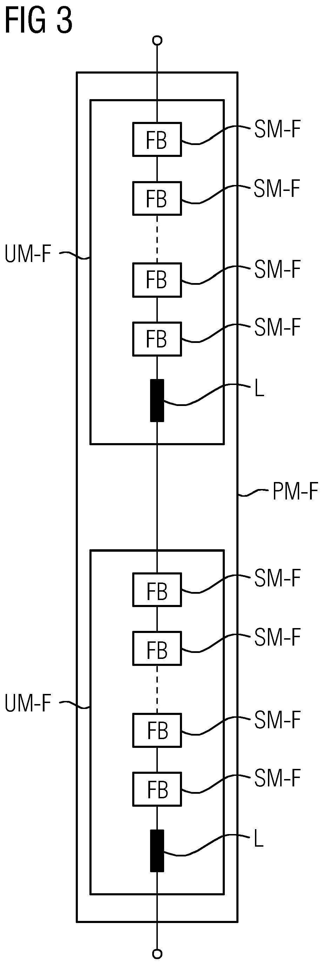

In Fig. 3 ist ein Phasenmodul PM-F eines Teil-Stromrichters TMMC-F gezeigt, das aus in Reihe geschalteten bipolaren Submodulen SM-H und einer Induktivität L gebildet ist. Die bipolaren Submodule SM-F sind hier speziell mit Halbleiterschaltern in Vollbrückenschaltung FB (s. Fig. 5) ausgeführt.

Fig. 4 und Fig. 5 zeigen ein unipolares Submodul SM-H mit Halbleiterschaltern in Halbbrückenschaltung und ein bipolares Submodul SM-F mit Halbleiterschaltern in Vollbrückenschaltung.

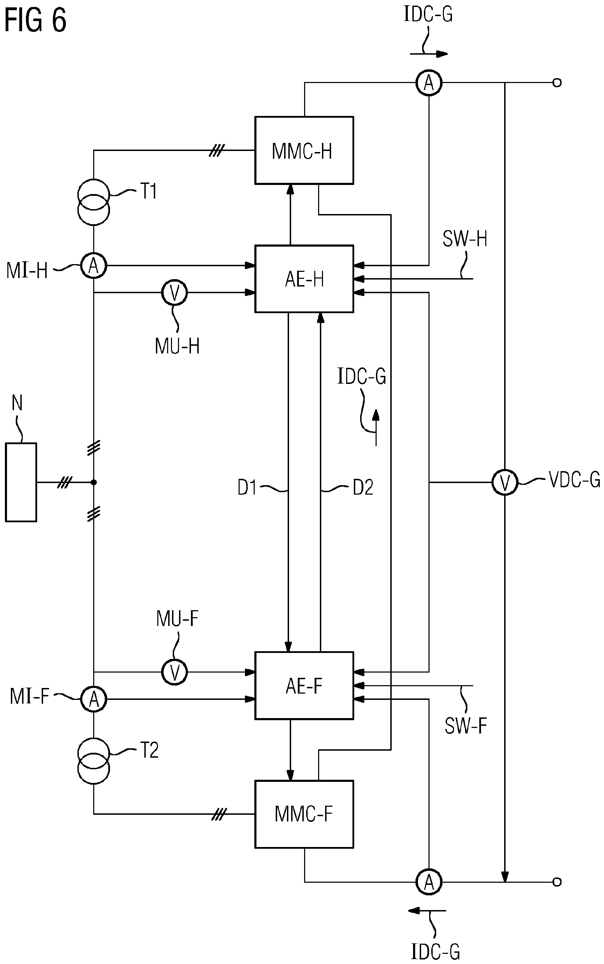

Fig. 6 zeigt die Steuerung der Stromrichteranordnung GMMC gemäß Fig. 1. Zur Regelung (automatischen Steuerung) der beiden Teil-Stromrichter TMMC-H, TMMC-F dienen zwei Ansteuereinheiten AE-H, AE-F, denen entsprechende Sollwerte SW-H, SW-F vorgegeben sind.

Vor den Transformatoren T1, T2, also primärseitig, erfolgt jeweils eine Strommessung MI-H, MI-F und eine Spannungsmessung MU-H, MU-F, deren Werte der jeweiligen Ansteuereinheit AE-H, AE-F zugeführt werden. Aus diesen ermitteln die Ansteuereinheiten AE-H, AE-F die entsprechenden Steuersignale S-H und S-F für die Submodule SM-H, SM-F der Teil-Stromrichter TMMC-H, TMMC-F. Zusätzlich werden den Ansteuereinheiten AE-H, AE-F der durch die Teil-Stromrichter TMMC-H, TMMC-F fließende Gleichstrom IDC-G und die Ausgangsgleichspannung VDC-G zugeführt. Für eine entsprechende Regelung tauschen die beiden Ansteuereinheiten AE-H, AE-F die erforderlichen Daten D1, D2 aus.

Die Regelung des Gesamtstromrichters GMMC durch die beiden Ansteuereinheiten AE-H, AE-F erfolgt so, dass jede Ansteuereinheit AE-H, AE-F jeweils die zugehörige Teil-Gleichspannung VDC-H bzw. VDC-F verringert, wenn der Gleichstrom IDC-G den vorgegebenen Sollwert SW-H, SW-F überschreitet.

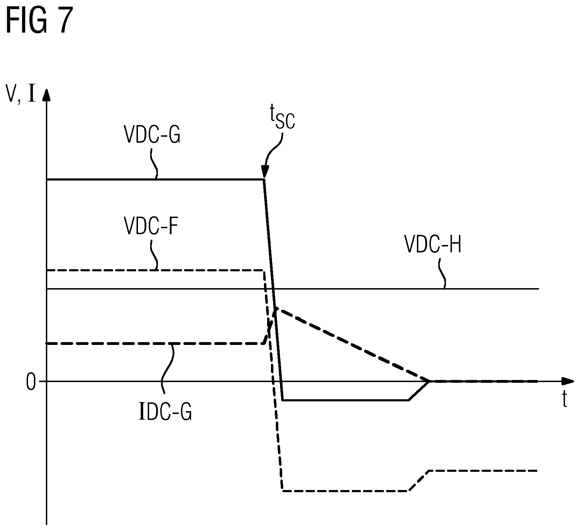

Fig. 7 zeigt den Verlauf der Gleichspannungen und des Gleichstroms IDC-G nach einem Kurzschluss tSC über der Zeit t in einer schematischen Darstellung. Im Falle eines Kurzschlusses zum Zeitpunkt tSC als einem speziellen Fehlerstrom auf der Gleichspannungsseite (einem Gleichstrom-Fehlerstrom) kommt es trotz Verringerung der Teil-Gleichspannungen VDC-H, VDC-F der Teil-Stromrichter TMMC-H, TMMC-F zunächst zu einer weiteren Überschreitung des Gleichstroms IDC-G. In Fig. 7 ist die weitere Überschreitung des Gleichstroms IDC-G nach dem Kurzschluss tSC schematisch dargestellt.

Man erkennt, dass der Teil-Stromrichter TMMC-F seine Ausgangsspannung VDC-F in kürzester Zeit t bis auf 0 verringert, danach invertiert und dann betragsmäßig wieder vergrößert, d. h. eine zunehmende Spannung VDC-F mit umgekehrtem Vorzeichen erzeugt. Die Spannung VDC-F mit umgekehrtem Vorzeichen nimmt betragsmäßig so lange zu, bis die Gleichspannung VDC-H des Teil-Stromrichters TMMC-H zumindest kompensiert ist. Der Teil-Stromrichter TMMC-F ist hier so ausgelegt, dass die Teil-Gleichspannung VDC-H überkompensiert wird, d.h. dass eine kleine Überkompensation erfolgt. Der Strom IDC-G nimmt nach dem Kurzschluss tSC etwas zu, bis es zur entsprechenden Absenkung der Gleichspannung VDC-F kommt. Der vorgegebene Gleichstrom IDC-G wird im Falle eines Kurzschlusses etwas erhöht und dann aufgrund der erfolgenden Kompensation der Gleichspannung VDC-H zunächst stark "überverringert" und dann abgeschaltet.

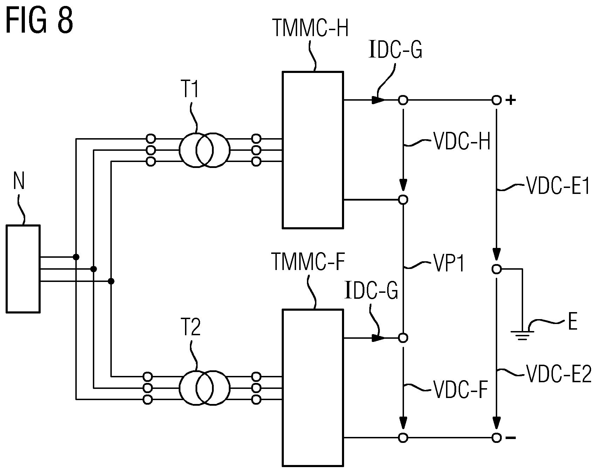

Fig. 8 zeigt eine Stromrichteranordnung GMMC mit zwei Teil-Stromrichtern TMMC-H, TMMC-F ausgeführt als symmetrischer Monopol mit einer symmetrischen Erdung E.

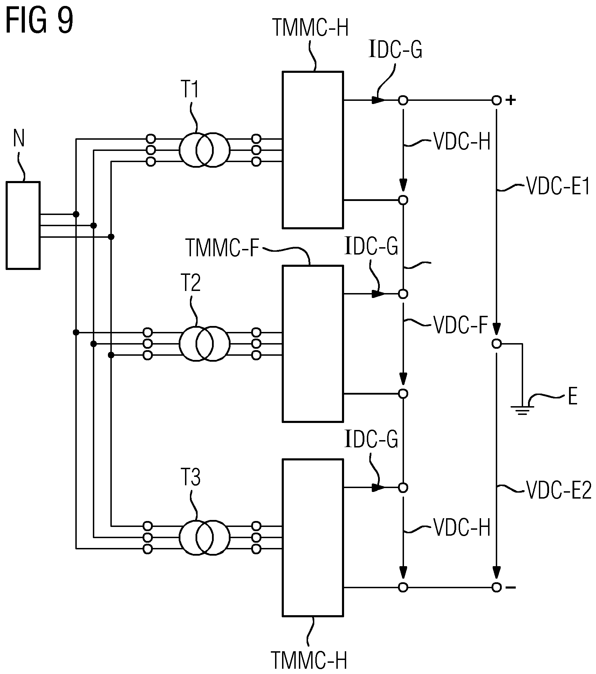

Fig. 9 zeigt eine Stromrichteranordnung GMMC mit drei Teil-Stromrichtern TMMC-H, TMMC-F ausgeführt als symmetrischer Monopol mit einer symmetrischen Erdung E. Der Teil-Stromrichter TMMC-F kompensiert hier im Falle eines Fehlerstroms (eines Kurzschlusses) die Teil-Gleichspannungen VDC-H der beiden Teil-Stromrichter TMMC-H.

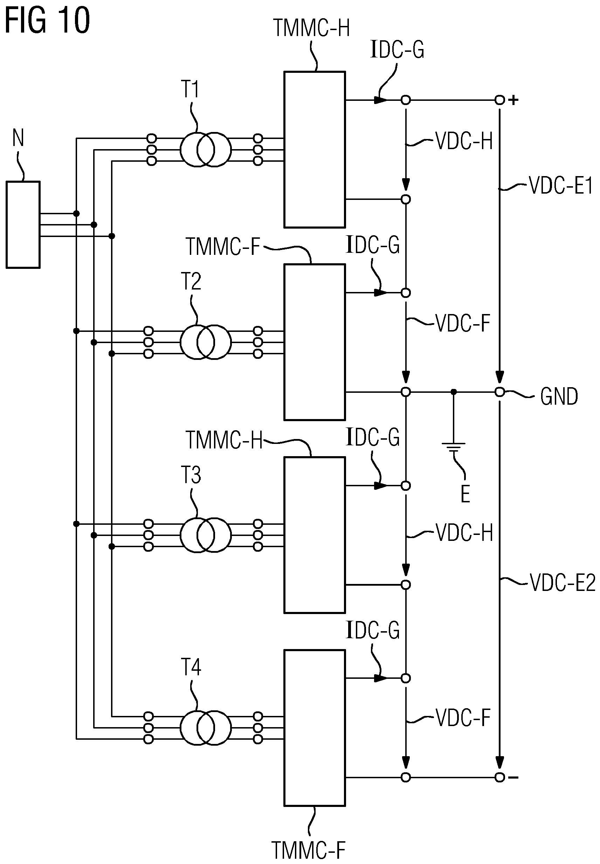

Fig. 10 zeigt eine Stromrichteranordnung GMMC mit vier Teil-Stromrichtern TMMC-H, TMMC-F ausgeführt als Bipol mit einer Erdung E. Der Teil-Stromrichter TMMC-F kompensiert hier im Falle eines Fehlerstroms (eines Kurzschlusses) die Teil-Gleichspannungen VDC-H des zugehörigen Teil-Stromrichters TMMC-H, also bezogen auf Fig. 10 von oben nach unten gezählt: Der zweite Teil-Stromrichter TMMC-F kompensiert die Teil-Gleichspannung VDC-H des ersten Teil-Stromrichters TMMC-H und der vierte Teil-Stromrichter TMMC-F kompensiert die Teil-Gleichspannung VDC-H des dritten Teil-Stromrichters TMMC-H.

## Patentansprüche

1. Stromrichteranordnung (GMMC) zum Anschließen eines Wechselstromnetzes (N) über primärseitig parallel geschaltete Transformatoren (T1, T2), wobei die Stromrichteranordnung (GMMC) eine Gesamt-Gleichspannung (VDC-G) zur elektrischen Energieversorgung im Hochspannungsbereich bereitstellt,
mit in Reihe geschalteten Teil-Stromrichtern (TMMC-H, TMMC-F), deren Teil-Gleichspannungen (VDC-H, VDC-F) die Gesamt-Gleichspannung (VDC-G) bilden und die jeweils drei parallel geschaltete zweipolige Phasenmodule aufweisen (PM-H, PM-F), wobei jedes Phasenmodul (PM-H, PM-F) aus zwei in Reihe geschalteten Stromrichtermodulen (UM-H, UM-F) gebildet ist, die jeweils über einen zweiten Verbindungspunkt (VP2) miteinander verbunden sind, der einen der Phasenanschlüsse (PA1, PA2, PA3) bildet, wobei jeweils ein Transformator (T1, T2) an die Phasenanschlüsse (PA1, PA2, PA3) eines Teil-Stromrichters (TMMC-H, TMMC-F) anschließbar ist,
wobei die beiden Stromrichtermodule (UM-H, UM-F) der Phasenmodule (PM-H, PM-U) eines ersten Teil-Stromrichters (TMMC-H) aus in Reihe geschalteten unipolaren Submodulen (SM-H) und die eines zweiten Teil-Stromrichters (TMMC-F) aus in Reihe geschalteten bipolaren Submodulen (SM-F) gebildet und der erste und zweite Teil-Stromrichter (TMMC-H, TMMC-F) über einen ersten Verbindungspunkt (VP1) miteinander verbunden sind, und
wobei der Gesamtstromrichter (GMMC) zur Regelung der beiden Teil-Stromrichter (TMMC-H, TMMC-F) zwei Ansteuereinheiten (AE-H, AE-F) aufweist, welche dazu eingerichtet sind, einen durch die Teil-Stromrichter (TMMC-H, TMMC-F) fließenden Gleichstrom (IDC-G) auf einen vorgegebenen Sollwert (SW-H, SW-F) einzustellen, wobei eine der Ansteuereinheiten dazu eingerichtet ist, jeweils zumindest die Teil-Gleichspannung (VDC-F) des zweiten Teil-Stromrichters (TMMC-F) zu verringern, wenn der Gleichstrom (IDC-G) den Sollwert (SW-H, SW-F) überschreitet, wobei die Regelung ferner dazu eingerichtet ist, die Teil-Gleichspannung (VDC-F) des zweiten Teil-Stromrichters (TMMC-F) bis zur Überkompensation der Teil-Gleichspannung (VDC-H) des ersten Teil-Stromrichters (TMMC-H) zu invertieren, wobei das Invertieren einer Spannung das Erzeugen einer Spannung mit umgekehrtem Vorzeichen bedeutet.

2. Stromrichteranordnung (GMMC) nach Anspruch 1,
**dadurch gekennzeichnet,**
**dass** die unipolaren Submodule (SM-H) Halbleiterschalter aufweisen, die als Halbbrücke (HB) geschaltet sind.

3. Stromrichteranordnung (GMMC) nach Anspruch 1,
**dadurch gekennzeichnet,**
**dass** die bipolaren Submodule (SM-F) Halbleiterschalter aufweisen, die als Vollbrücke (FB) geschaltet sind.

4. Stromrichteranordnung (GMMC) nach Anspruch 2 oder 3,
**dadurch gekennzeichnet,**
**dass** die Halbleiter der Halbleiterschalter der unipolaren Submodule (SM-H) und der bipolaren Submodule (SM-F) zu verschiedenen-Spannungsklassen gehören, um die Stromtragfähigkeit der Teil-Stromrichter (TMMC-H, TMMC-F) an einander anzupassen.

5. Stromrichteranordnung (GMMC) nach Anspruch 4,
**dadurch gekennzeichnet,**
**dass** die Halbleiterschalter der unipolaren Submodule (SM-H) in einer Parallelschaltung ausgeführt sind, um die Stromtragfähigkeit beider Teilkonverter aneinander anzupassen.

6. Verfahren zur Abschaltung eines Gleichstrom-Fehlerstroms bei einer Stromrichteranordnung (GMMC) (mehrphasiger Mehrstufen-Stromrichter) zum Anschließen eines dreiphasigen Wechselstromnetzes über primärseitig parallel geschaltete Transformatoren (T1, T2), wobei die Stromrichteranordnung (GMMC) eine Gesamt-Gleichspannung (an zwei Ausgangs-Gleichspannungsanschlüssen) zur elektrischen Energieversorgung im Hochspannungsbereich bereitstellt, wobei der Gesamtstromrichter (GMMC) aus in Reihe geschalteten Teil-Stromrichtern (TMMC-H, TMMC-F) gebildet ist, deren Teil-Gleichspannungen die Gesamt-Gleichspannung (des Gesamtstromrichters) bilden und die jeweils drei parallel geschaltete (miteinander verbundene) zweipolige Phasenmodule aufweisen,
wobei jedes Phasenmodul (PM) aus zwei in Reihe geschalteten Stromrichtermodulen (UM) gebildet ist, die jeweils über einen zweiten Verbindungspunkt miteinander verbunden sind, der einen der Phasenanschlüsse bildet, wobei jeweils ein Transformator (T1, T2) an die Phasenanschlüsse eines Teil-Stromrichters (TMMC-H, TMMC-F) angeschlossen ist,
wobei die beiden Stromrichtermodule (UM) der Phasenmodule (PM) eines ersten Teil-Stromrichters (TMMC-H) aus in Reihe geschalteten unipolaren Submodulen und die eines zweiten Teil-Stromrichters (TMMC-F) aus in Reihe geschalteten bipolaren Submodulen gebildet und der erste und zweite Teil-Stromrichter (TMMC-H, TMMC-F) über einen ersten Verbindungspunkt miteinander verbunden sind,
bei dem eine Regelung den Gleichstrom auf einen vorgegebenen Sollwert regelt, indem jeweils zumindest die Teil-Gleichspannung des zweiten Teil-Stromrichters (TMMC-F) verringert wird, wenn der Gleichstrom den Sollwert überschreitet, wobei die Teil-Gleichspannung des ersten Teil-Stromrichters (TMMC-H) von der Teil-Gleichspannung des zweiten Teil-Stromrichters (TMMC-F) überkompensiert wird, indem vom zweiten Teil-Stromrichter (TMMC-F) eine entsprechende Gegenspannung gebildet wird.

## Claims

1. Converter assembly (GMMC) for connecting an AC grid (N) via transformers (T1, T2) connected in parallel on the primary side, wherein the converter assembly (GMMC) provides a total DC voltage (VDC-G) for supplying electrical energy in the high-voltage range,
with series-connected partial converters (TMMC-H, TMMC-F), the partial DC voltages (VDC-H, VDC-F) of which form the total DC voltage (VDC-G) and which each comprise three parallel-connected two-pole phase modules (PM-H, PM-F), each phase module (PM-H, PM-F) being formed from two series-connected converter modules (UM-H, UM-F) that are each connected to one another at a second connection point (VP2), which forms one of the phase connections (PA1, PA2, PA3), wherein in each case one transformer (T1, T2) can be connected to the phase connections (PA1, PA2, PA3) of a partial converter (TMMC-H, TMMC-F),
wherein the two converter modules (UM-H, UM-F) of the phase modules (PM-H, PM-U) of a first partial converter (TMMC-H) are formed from series-connected unipolar sub-modules (SM-H) and those of a second partial converter (TMMC-F) are formed from series-connected bipolar sub-modules (SM-F), and the first and second partial converters (TMMC-H, TMMC-F) are connected to one another at a first connection point (VP1), and
wherein the total converter (GMMC) has two drive units (AE-H, AE-F) to regulate the two partial converters (TMMC-H, TMMC-F), said drive units being configured to set a direct current (IDC-G) flowing through the partial converters (TMMC-H, TMMC-F) to a predetermined target value (SW-H, SW-F), one of the drive units being configured to reduce in each case at least the partial DC voltage (VDC-F) of the second partial converter (TMMC-F) when the direct current (IDC-G) exceeds the target value (SW-H, SW-F), the regulator further being configured to invert the partial DC voltage (VDC-F) of the second partial converter (TMMC-F) until the partial DC voltage (VDC-H) of the first partial converter (TMMC-H) is overcompensated for, the inversion of a voltage meaning the production of a voltage having the opposite arithmetic sign.

2. Converter assembly (GMMC) according to Claim 1,
**characterized in that**
the unipolar sub-modules (SM-H) comprise semiconductor switches that are connected as half-bridges (HB).

3. Converter assembly (GMMC) according to Claim 1,
**characterized in that**
the bipolar sub-modules (SM-F) comprise semiconductor switches that are connected as full bridges (VB).

4. Converter assembly (GMMC) according to Claim 2 or 3,
**characterized in that**
the semiconductors of the semiconductor switches of the unipolar sub-modules (SM-H) and of the bipolar sub-modules (SM-F) belong to different voltage classes in order to match the current-carrying capacities of the partial converters (TMMC-H, TMMC-F) to one another.

5. Converter assembly (GMMC) according to Claim 4,
**characterized in that**
the semiconductor switches of the unipolar sub-modules (SM-H) are implemented in a parallel circuit in order to match the current-carrying capacities of the two partial converters to one another.

6. Method for disconnecting a DC fault current in a converter assembly (GMMC) (multi-phase multi-stage converter) for connecting a three-phase AC grid via transformers (T1, T2) connected in parallel on the primary side, wherein the converter assembly (GMMC) provides a total DC voltage (at two DC voltage output connections) for supplying electrical energy in the high-voltage range, the total converter (GMMC) being formed from series-connected partial converters (TMMC-H, TMMC-F), the partial DC voltages of which form the total DC voltage (of the total converter) and which each comprise three parallel-connected (interconnected) two-pole phase modules, wherein each phase module (PM) is formed from two series-connected converter modules (UM) that are each connected to one another at a second connection point, which forms one of the phase connections, wherein in each case one transformer (T1, T2) is connected to the phase connections of a partial converter (TMMC-H, TMMC-F),
wherein the two converter modules (UM) of the phase modules (PM) of a first partial converter (TMMC-H) are formed from series-connected unipolar sub-modules and those of a second partial converter (TMMC-F) are formed from series-connected bipolar sub-modules, and the first and second partial converters (TMMC-H, TMMC-F) are connected to one another at a first connection point,
in which a regulator regulates the direct current to a predetermined target value by reducing in each case at least the partial DC voltage of the second partial converter (TMMC-F) when the direct current exceeds the target value, wherein the partial DC voltage of the first partial converter (TMMC-H) is overcompensated for by the partial DC voltage of the second partial converter (TMMC-F) by virtue of the second partial converter (TMMC-F) producing an appropriate opposing voltage.

## Revendications

1. Ensemble (GMMC) convertisseur de raccordement d'un réseau (N) de courant alternatif par des transformateurs (T1, T2) montés en parallèle du côté primaire, dans lequel l'ensemble (GMMC) convertisseur donne une tension (VDC-G) continue d'ensemble pour l'alimentation en énergie électrique dans le domaine de la haute tension, comprenant des convertisseurs (TMMC-H, TMMC-F) partiels montés en série, dont les tensions (VDC-H, VDC-F) continues partielles forment la tension (VDC-G) continue d'ensemble et qui ont (PM-H, PM-F) trois modules de phase bipolaires montés en parallèle, dans lequel chaque module (PM-H, PM-F) de phase est formé de deux modules (UM-H, UM-F) de convertisseur montés en série, qui sont reliés entre eux respectivement par un deuxième point (VP2) de liaison, qui forme l'une des bornes (PA1, PA2, PA3) de phase, dans lequel respectivement un transformateur (T1, T2) peut être raccordé aux bornes (PA1, PA2, PA3) de phase d'un convertisseur (TMMC-H, TMMC-F) partiel,
dans lequel les deux modules (UM-H, UM-F) de convertisseur des modules (PM-H, PM-U) de phase d'un premier convertisseur (TMMC-H) partiel est formé de sous-modules (SM-H) monopolaires montés en série et ceux d'un deuxième convertisseur (TMMC-F) partiel de sous-modules (SM-F) bipolaires montés en série et le premier et le deuxième convertisseurs (TMMC-H, TMMC-F) partiels sont reliés entre eux par un premier point (VP1) de liaison, et
dans lequel le convertisseur (GMMC) d'ensemble a, pour la régulation des deux convertisseurs (TMMC-H, TMMC-F) partiels, deux unités (AE-H, AE-F) de commande, qui sont agencées pour régler un courant (IDC-G) continu passant dans les convertisseurs (TMMC-H, TMMC-F) partiels à une valeur (SW-H, SW-F) de consigne donnée à l'avance, dans lequel l'une des unités de commande est agencée pour diminuer respectivement au moins la tension (VDC-F) continue partielle du deuxième convertisseur (TMMC-F) partiel, si le courant (IDC-G) continu dépasse la valeur (SW-H, SW-F) de consigne, dans lequel la régulation est agencée en outre pour inverser la tension (VDC-F) continue partielle du deuxième convertisseur (TMMC-F) partiel jusqu'à la surcompensation de la tension (VDC-H) continue partielle du premier convertisseur (TMMC-H) partiel, dans lequel l'inversion d'une tension signifie la production d'une tension de signe contraire.

2. Ensemble (GMMC) convertisseur suivant la revendication 1,
**caractérisé en ce que**
les sous-modules (SM-H) monopolaires ont des interrupteurs à semiconducteur, qui sont montés en demi-pont (HB).

3. Ensemble (GMMC) convertisseur suivant la revendication 1,
**caractérisé en ce que**
les sous-modules (SM-F) bipolaires ont des interrupteurs à semiconducteur, qui sont montés en pont (FB) complet.

4. Ensemble (GMMC) convertisseur suivant la revendication 2 ou 3,
**caractérisé en ce que**
les semiconducteurs des interrupteurs à semiconducteur des sous-modules (SM-H) monopolaires et sous-modules (SM-F) bipolaires appartiennent à des classes de tension différentes, afin d'adapter entre elles la capacité à porter le courant des deux convertisseurs (TMMC-H, TMMC-F) partiels.

5. Ensemble (GMMC) convertisseur suivant la revendication 4,
**caractérisé en ce que**
les interrupteurs à semiconducteur des sous-modules (SM-H) monopolaires sont réalisés en un circuit en parallèle, afin d'adapter l'une à l'autre la capacité à porter le courant des deux convertisseurs partiels.

6. Procédé de coupure d'un courant de fuite en courant continu dans un ensemble (GMMC) de convertisseur (convertisseur polyphasé à plusieurs étages) pour le raccordement d'un réseau de courant alternatif triphasé par des transformateurs (T1, T2) montés en parallèle du côté primaire, dans lequel l'ensemble (GMMC) de convertisseur donne une tension continue d'ensemble (sur deux bornes de sortie de tension continue) pour l'alimentation en énergie électrique dans le domaine de la haute tension, dans lequel le convertisseur (GMMC) d'ensemble est formé de convertisseurs (TMMC-H, TMMC-F) partiels montés en série, dont les tensions continues partielles forment la tension continue d'ensemble (du convertisseur d'ensemble), et qui ont chacun trois modules de phase bipolaires montés en parallèle (reliés entre eux),
dans lequel chaque module (PM) de phase est formé de deux modules (UM) de convertisseur montés en série, qui sont chacun reliés entre eux par un deuxième point de liaison, qui forme l'une des bornes de phase, dans lequel respectivement un transformateur (T1, T2) est raccordé aux bornes de phase d'un convertisseur (TMMC-H, TMMC-F) partiel,
dans lequel les deux modules (UM) de convertisseur des modules (PM) de phase d'un premier convertisseur (TMMC-H) partiel sont formés de sous-modules monopolaires montés en série et ceux d'un deuxième convertisseur (TMMC-F) partiel de sous-modules bipolaires montés en série et le premier et le deuxième convertisseurs (TMMC-H, TMMC-F) partiels sont reliés entre eux par un premier point de liaison,
dans lequel un réglage règle le courant continu à une valeur de consigne donnée à l'avance, en diminuant respectivement au moins la tension continue partielle du deuxième convertisseur (TMCC-F) partiel si le courant continu dépasse la valeur de consigne, dans lequel on surcompense la tension continue partielle du premier convertisseur (TMMC-H) partiel par la tension continue partielle du deuxième convertisseur (TMMC-F) partiel en formant une contre-tension correspondante par le deuxième convertisseur (TMMC-F) partiel.
